## Europäisches Patentamt
## European Patent Office
## Office européen des brevets

(11) Veröffentlichungsnummer: **0 204 683**

**A2**

(12) **EUROPÄISCHE PATENTANMELDUNG**

(21) Anmeldenummer: **86890106.7**

(22) Anmeldetag: **16.04.86**

(51) Int. Cl.⁴: **B28B 1/02 , B28B 7/00 , B28B 13/06**

(30) Priorität: **22.04.85 AT 1203/85**

(43) Veröffentlichungstag der Anmeldung:
**10.12.86 Patentblatt 86/50**

(84) Benannte Vertragsstaaten:
**AT CH DE FR GB IT LI**

(71) Anmelder: **Meisel, Ronald M. Dipl. Ing.**
**Am Lainbach 23**
**D-8113 Kochel am See(DE)**
Anmelder: **M.Larnhof Gesellschaft m.b.H.&**
**Co.KG. Stoober-Sinterkeramik-Manufactur**
**Keramikstr. 14**
**A-7344-Stoob(AT)**

(72) Erfinder: **Meisel, Ronald M., Dipl.-Ing.**
**Am Lainbach 23**
**D-8113 Kochel am See(DE)**
Erfinder: **Graf, Herbert**
**Hauptstrasse 172**
**A-7344 Stoob(AT)**

(74) Vertreter: **Rippel, Andreas, Dipl.-Ing.**
**Maxingstrasse 34**
**A-1130 Wien(AT)**

(54) **Vorrichtung für Rollverfahren und entsprechend wirkende Verfahren zur Herstellung von keramischen Artikeln.**

(57) Bei einer Vorrichtung für Rollverfahren und entsprechend wirkende Verfahren zur Herstellung von keramischen Artikeln werden die Arbeitsformen(A)mit eingegossenen Kanälen 4 versehen, durch die bei der Artikelausformung das Vakuum verstärkt im Arbeitsbereich zur Geltung kommt und so die Artikelqualität erhöht. Damit die Kanäle 4 möglichst nah unter der Oberfläche angebracht werden können und um die Festigkeit zu erhöhen, ist in diesem Bereich ein Metallgitter mit in die Arbeitsform (A) eingegossen.

Damit die Verbindung zwischen dem Vakuumsystem der Forgebungsmaschine und der Arbeitsform (A) hergestellt werden kann, wird ein Verbindungsstück 3 zum Einsatz gebracht.

Nach dem Ausformvorgang werden eine oder mehrere Arbeitsformen auf einer Übergabestation abgesetzt. Nach dem Schwenken der Arbeitsformen werden diese nun mit Druckluft beaufschlagt. Dies bewirkt über die eingegossenen Kanäle 4, daß sich der Artikel aus der Arbeitsform (A) löst.

Durch diese Vorrichtung wird die Anzahl der Arbeitsformen drastisch gesenkt und es erübrigt sich das aufwendige und mit hohem Energieaufwand verbundene Trocknen der Arbeitsformen.

Figur 1

**Vorrichtung für Rollverfahren und entsprechend wirkende Verfahren zur Herstellung von keramischen Artikeln**

Die Erfindung betrifft eine Vorrichtung für Rollverfahren und entsprechend wirkende Verfahren zur Herstellung von keramischen Artikeln.

Beim Formen von keramischen Artikeln ist es sehr wichtig, daß sich zwischen der Keramikmasse und der Arbeitsform keine Luftblasen bilden, daß sich die Keramikmasse während des Formgebungsvorganges nicht von der Arbeitsform löst und daß sich die Keramikmasse nicht auf oder in der Arbeitsform verdrehen kann. Wesentlich ist außerdem, daß sich der ausgeformte Artikel so - schnell wie möglich von der Arbeitsform löst, um die Anzahl der Arbeitsformen so gering wie möglich halten zu können.

Es ist bekannt, daß zur Erfüllung dieser Erfordernisse versucht wird, das Vakuum durch die gesamte Arbeitsform an der Masse anliegen zu lassen. Damit die ausgeformten Artikel die Arbeitsform verlassen können ist es notwendig, daß diese nach jedem Arbeitsvorgang zusammen getrocknet werden müssen. Beim Trockenvorgang muß die Arbeitsform schon deshalb mit aufgeheizt werden, damit die beim Formvorgang anfallende Feuchtigkeit aus der Arbeitsform entweicht.

Durch die Dicke der Arbeitsform ist es schlecht möglich, das Vakuum in der gewünschten Stärke im Arbeitsbereich der Arbeitsform anliegen zu lassen. Außerdem setzt dies voraus, daß der Gips der Arbeitsform so porös wie möglich ist. Der Gips der diese Forderung erfüllt hat aber den großen Nachteil, daß die Standzeit nur gering ist (ca. 100-150 Ausformungen mit einer Arbeitsform möglich). Um die Artikel und die Arbeitsformen zu trocknen, ist auch ein großer technischer Aufwand mit hohem Energiebedarf notwendig. Da überdies die Trocknung nur mit maximal 80°C erfolgen darf, wird eine große Anzahl von Arbeitsformen benötigt (180-1500 Arbeitsformen).

Der Erfindung liegt die Aufgabe zugrunde, das Vakuum besser an der Oberfläche der Arbeitsform anliegen zu lassen, um dadurch die Artikelqualität zu steigern, den Einsatz von harten Materialien für die Arbeitsform zu ermöglichen und so die Standzeit wesentlich (um das ca. 50fache) zu erhöhen, die ausgeformten Artikel so schnell wie möglich von der Arbeitsform zu lösen um die Anzahl der Arbeitsformen drastisch zu senken, den technischen Aufwand zu verringern, den Energiebedarf erheblich zu senken und die Lagerhaltung der Arbeitsformen zu vereinfachen.

Diese Aufgabe wird erfindungsgemäß dadurch gelöst, daß diese Vorrichtung aus einer geringen Anzahl von Arbeitsformen zum Ein-oder Überformen, einem Verbindungsstück zwischen der Arbeitsform und dem Vakuumsystem in der Formgebungsmaschine sowie einer Übergabestation zur Aufnahme der Arbeitsform und zum Entleeren dieser besteht.

Um das Vakuum besser an der Oberfläche der Arbeitsform anliegen zu lassen und um die Feuchtigkeit zu entziehen, ist diese mit eingegossenen Kanälen, die durch luftdurchlässige Rohre, Schläuche oder dgl. gebildet werden versehen. Diese Kanäle müssen sich möglichst nah unter der Oberfläche der Arbeitsform im Formbereich befinden. Um Brüche der Arbeitsform in diesen Bereichen zu vermeiden, und um die Beständigkeit gegen Bruch allgemein zu erhöhen, wird bei den Kanälen ein Metallgitter mit eingegossen. Dies bringt außerdem die Vorteile mit sich, daß bei der Herstellung der Arbeitsform das Material, welches die Kanäle bildet,an diesem Gitter befestigt werden kann und somit wird die Arbeitsformherstellung erleichtert und daß die Sicherheit der Bedienungsperson an der Rollermaschine erhöht wird. Denn bei Bedienungsfehlern wird oft die Arbeitsform zerstört und die Teile der Arbeitsform fliegen durch die Fliehkraft mit hoher Geschwindigkeit davon und können zu schweren Verletzungen führen. Das eingegossene Gitter hält die Teile zumindest lose zusammen und verhindert solche Unfälle.

Bei geteilten Arbeitsformen werden lediglich an den Trennstellen Verbindungsstücke mit Dichtelementen angebracht.

Die Kanäle sowie der Anschluß an der Arbeitsform können mit Vakuum wie auch mit Druck beaufschlagt werden, das bedeutet, daß an der Arbeitsform nur ein einziger Anschluß und davon ausgehend nur ein einziges Kanalsystem notwendig ist.

Dieser Anschluß an der Arbeitsform wird zweckmäßiger Weise so ausgeführt, daß er auch gleichzeitig zum Halten der Arbeitsform bei der Formgebung und beim Entleeren dient. Durch diesen Anschluß und durch die durch die Erfindung erzielte Möglichkeit des Einsatzes härterer Materialien für die Arbeitsform verliert die bisher sehr wichtige Arbeitsformaufnahme an Bedeutung. Die Kräfte werden nun voll von der Arbeitsform aufgenommen. An der Rollermaschine übernimmt sie nur noch die Aufgabe einer Führung und an der Übergabestation übernimmt die Aufgabe der Arbeitsformaufnahme nun der für diesen Zweck besonders ausgebildete Anschluß. Außerdem wird über diesen Anschluß die Verbindung zwischen der Arbeitsform und dem Vakuumsystem der Formgebungsmaschine mittels Verbindungsstück hergestellt.

Nachdem der Artikel ausgeformt ist, wird die Arbeitsform mit dem Artikel manuell oder automatisch einer Übergabestation zugeführt. Dort werden die Arbeitsformen am Anschlußstück festgehalten.

Nachdem die Arbeitsform in die richtige Position gebracht wurde, wird über das Anschlußstück der Arbeitsform Druckluft zugeführt. Dadurch löst sich der Artikel von der Arbeitsform und diese steht sofort wieder zum nächsten Arbeitsvorgang zur Verfügung.

Das Trocknen der Arbeitsformen entfällt, da dieser durch das Vakuum die angefallene Feuchtigkeit entzogen wurde.

Die mit der Erfindung erzielten Vorteile bestehen insbesondere darin, daß der außerordentliche hohe Energiebedarf gesenkt wird, daß das Vakuum im Arbeitsbereich wesentlich wirksamer als herkömmlich zur Geltung kommt und damit die Qualität der hergestellten Artikel bedeutend verbessert wird.

Die Anzahl der Arbeitsformen wird durch das sofortige Entleeren der ausgeformten Artikel drastisch gesenkt, die Standzeit wird wesentlich erhöht, und damit wird die Herstellung der Arbeitsformen sowie der Kostenaufwand stark reduziert. Durch die geringe Anzahl der Arbeitformen wird die Lagerhaltung wesentlich vereinfacht.

Weitere Vorteile, Einzelheiten und Mermale der Erfindung ergeben sich aus der nachstehenden, anhand der beiliegenden Zeichnung erfolgenden Beschreibung eines bevorzugten Ausführungsbeispieles.

In der Zeichnung stellen dar: Fig. 1 einen Schnitt durch eine Arbeitsform mit einen eingeformten Artikel (mit R ist das Rollwerkzeug gekennzeichnet), Fig. 2 einen Schnitt durch eine Arbeitsform mit einen überformten Artikel (mit R ist das Rollwerkzeug gekennzeichnet), Fig. 3 einen Schnitt durch eine Arbeitsformaufnahme, in der unter der Arbeitsform das Verbindungsstück zwischen dem Anschluß der Arbeitsform und dem Vakuumsystem der Formgebungsmaschine im Schnitt dargestellt ist, und Fig. 4 eine Seitenansicht der Übergabestation.

In den Figuren ist eine Vorrichtung für Rollverfahren und entsprechend wirkende Verfahren zur Herstellung von keramischen Artikeln dargestellt, welche aus Arbeitsformen, einem Verbindungsstück zwischen Arbeitsform und Vakuumsystem und einer Übergabestation besteht.

Die Arbeitsformen A, die aus einem Grundkörper 1, der aus Gips, Kunststoff oder ähnlichen besteht, aufgebaut sind, besitzen eingegossene Kanäle 4 für Vakuum oder Druckluft. Diese Kanäle, die spiralförmig um den Bereich angeordnet sind, in dem die Masse ausgeformt wird, werden durch Schläuche, Rohre oder dgl., gebildet, welche luftdurchlässig sind oder eine Vielzahl von Bohrungen in Richtung Formbereich aufweisen. Dadurch wird gewährleistet, daß der Druck oder das Vakuum im Arbeitsbereich der Arbeitsform wirksam wird.

Um zu ermöglichen, daß sich diese Kanäle 4 möglichst knapp unter der Arbeitsformoberfläche im Formbereich befinden können, wird in diesem Bereich in der Arbeitsform ein Metallgitter 2 mit eingegossen. Durch diese Maßnahme wird die Bruchfestigkeit der Arbeitsform erhöht, da sich der Druck über das Metallgitter gleichmäßiger verteilt und falls es doch zu einem Bruch der Arbeitsform kommen sollte, werden die Bruchstücke zusammengehalten und gefährden nicht die Umgebung.

Durch den Anschluß 3, der mit den Kanälen 4 verbunden ist, wird das Vakuum oder die Druckluft im Formbereich der Arbeitsform wirksam. Die Kanäle 4 sind so verteilt, daß das Vakuum oder die Druckluft an kritischen Stellen, wo es notwendig ist, verstärkt wirksam wird. Die genaue Anordnung der Kanäle 4 wird durch die Befestigungsmöglichkeit der Mittel, welche die Kanäle bilden, am Metallgitter 2 ermöglicht. Ferner wird über die Kanäle 4 der Arbeitsform die beim Fertigungsprozeß anfallende Feuchtigkeit durch das Vakuum entzogen. Der Anschluß 3 dient auch zum Halten der Arbeitsform A beim Fertigungsprozeß sowie beim Entleeren der Arbeitsform.

Dadurch können die Arbeitsformaufnahmen 11 für die Rollermaschine wesentlich einfacher hergestellt werden und in der Übergabestation C sind sie überhaupt nicht notwendig.

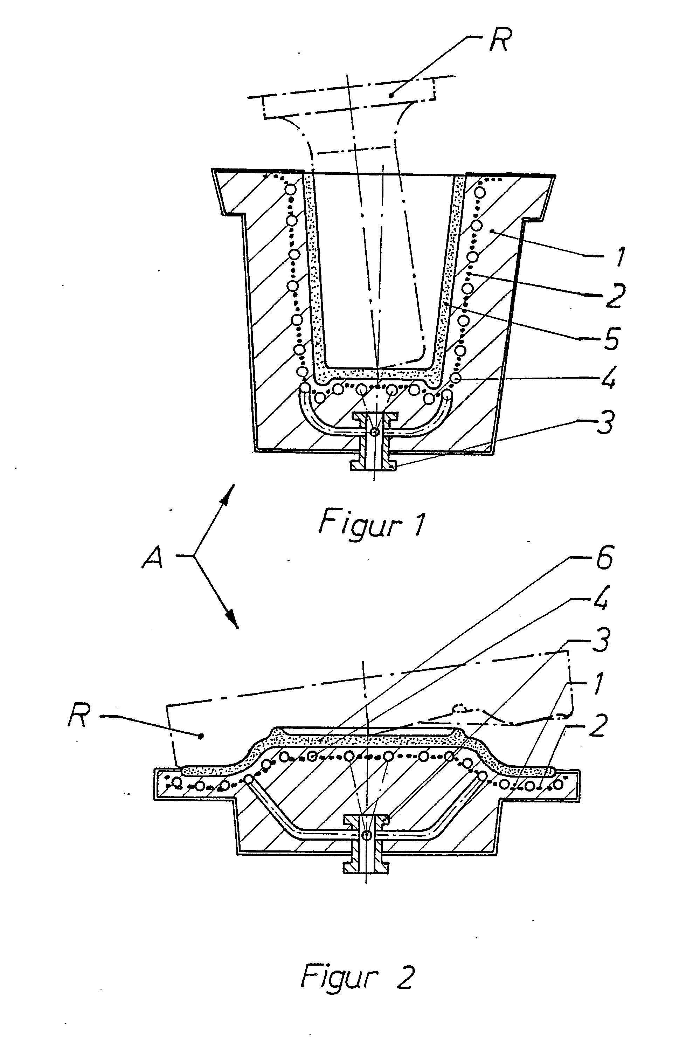

Bei geteilten Arbeitsformen werden die jeweiligen Kanalenden mit Dichtelementen versehen. Durch diese Maßnahme ist gewährleistet, daß beim Schließen der zwei-oder dreigeteilten Arbeitsform beim Fertigungsprozeß das Vakuum oder die Druckluft in allen Teilen der Arbeitsform wirksam ist. In der Fig. 1 ist im Schnitt ein eingeformter Artikel 5, in Fig. 2 ein überformter Artikel 6 dargestellt.

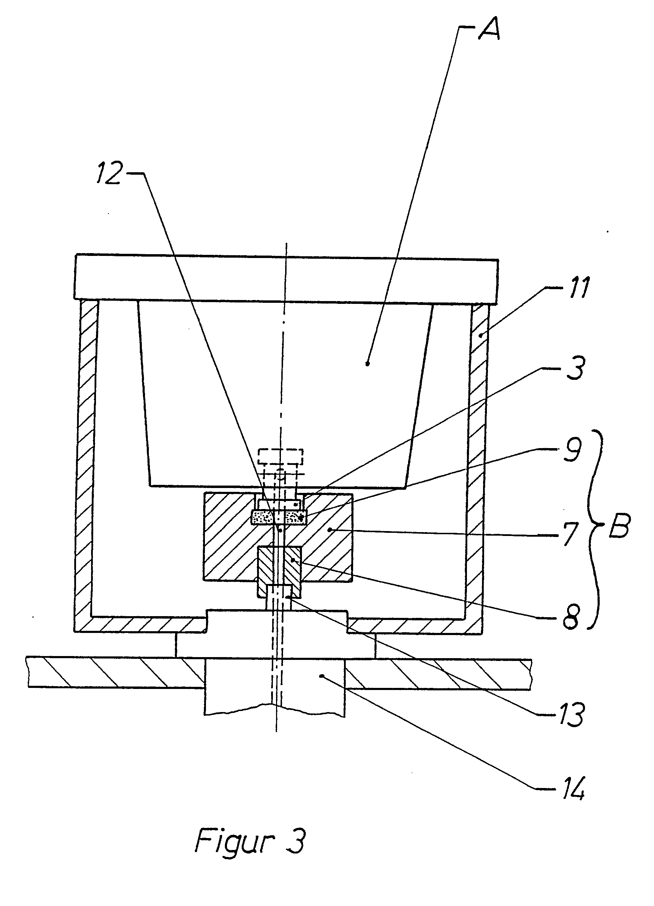

Gemäß Fig. 3 wird die Arbeitsform A wie beim herkömmlichen Verfahren in die Arbeitsformaufnahme 11 eingesetzt. Das in Fig. 3 dargestellte Verbindungsstück B, welches sich aus dem Dichtelement 9, der Ausstoßkappe 7 und dem Zwischenstück 8 zusammensetzt, sorgt dafür, daß das Vakuum in der Arbeitsform A voll zur Geltung kommt.

Der Anschluß 3 stellt dabei über das Dichtelement 9, das in der Ausstoßkappe 7 montiert ist, und über eine Bohrung 12 über eine Spindel 14 eine Verbindung zum Vakuumsystem der Formgebungsmaschine her.

Auf einer Ausstoßstange 13 ist ein Zwischenstück 8 leicht austauschbar aufgesteckt, das, um die verschiedenen Arbeitsformhöhen auszugleichen, je nach Bedarf ausgewechselt werden kann.

Zur Erhöhung der Eigenstabilität kann, insbesondere bei einem dünnen Artikel, dieser vor dem Entleeren aus der Arbeitsform Mikrowellen ausgesetzt werden. Solche Mikrowellen finden in Herden zur Ausführung von Aufwärmvorgängen Anwendung.

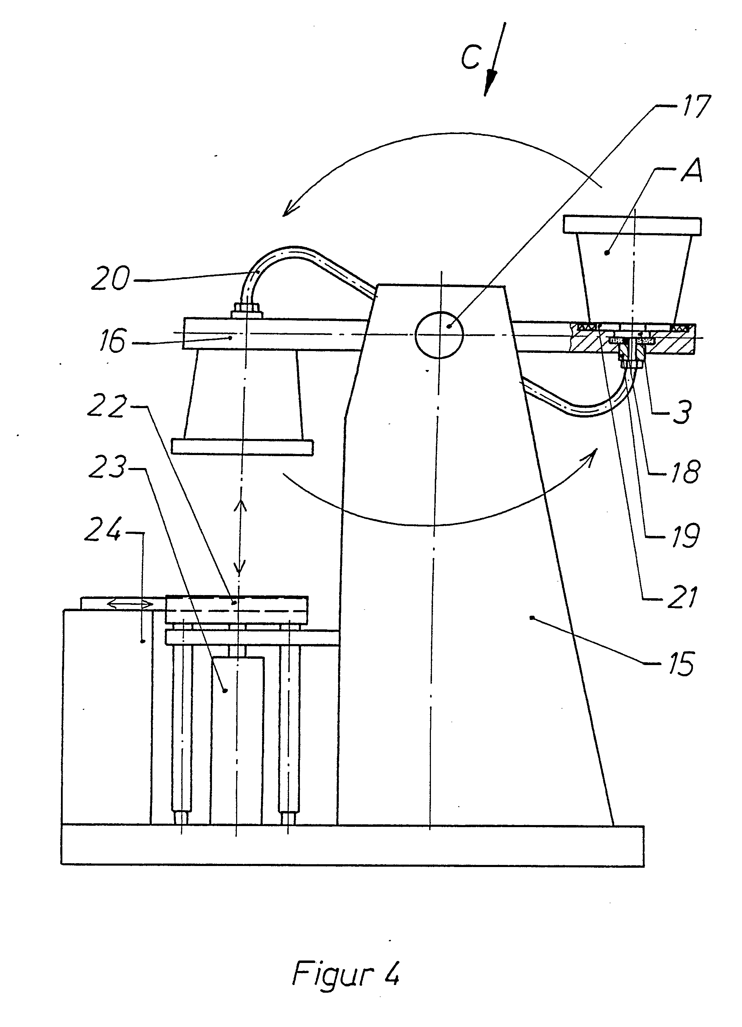

Nach dem Ausformvorgang bzw. der Behandlung durch Mikrowellen, wird die Arbeitsform A auf eine Übergabestation C gebracht, Fig.4. Diese weist ein Gestell 15 auf, an dem eine Schwenkvorrichtung 17 mit einem symetrischen Schwenkarm 16 angeordnet ist. Auf dem Schwenkarm 16 können je nach verlangter Leistung ein oder mehrere Arbeitsformen A abgesetzt werden.

Nach dem Absetzen der gewünschten Anzahl von Arbeitsformen A mit ausgeformten Artikeln auf dem Schwenkarm 16 werden diese, in diesem Fall durch die Schwenkvorrichtung 17, um 180° gedreht. Das Halten der Arbeitsform A während des Schwenkvorganges erfolgt am Zwischenstück 3 durch die Haltevorrichtung 21.

. Nach Beendigung des Schwenkvorganges wird über den Druckluftschlauch 20 und den Druckluftanschluß 19 Druckluft über den Anschluß 3 in die Arbeitsform A eingebracht. Eine Dichtung 18 sorgt für die maximale Wirkung der Druckluft in den Arbeitsformen. Die Druckluft gelangt über die eingegossenen Kanäle 4 durch den Gips, Kunststoff od.dgl. direkt an die Oberfläche des Artikels.

Durch diese Maßnahme löst sich der Artikel von der Arbeitsform A und wird von der Ablage 22 aufgenommen. Damit der Artikel nicht zu tief fällt, wird beim Entleervorgang die Ablage 22 durch eine Hubvorrichtung 23 angehoben.

Durch diese Maßnahme ist gewährleistet, daß der Artikel mit einer Präzision, die notwendig ist, damit der empfindliche Artikel nicht beschädigt oder verformt wird, und Geschwindigkeit ausgelöst wird, wie es manuell niemals möglich wäre.

Ist der Entleervorgang abgeschlossen, bringt die Hubvorrichtung 23 die Ablage 22 in die Ausgangsstellung zurück. Von dort werden die Artikel zur Abnahmestation 24 gebracht und nach kurzer Trockenzeit zur Weiterverarbeitung bereit gestellt.

Während das Entleeren der Arbeitsformen A vorgenommen wird, werden auf der anderen Seite des Schwenkarmes 16 Arbeitsformen A mit soeben ausgeformten Artikeln abgesetzt, so daß keine Totzeiten entstehen.

## Ansprüche

1. Vorrichtung für Rollverfahren und entsprechend wirkende Verfahren zur Herstellung von keramischen Artikeln, dadurch gekennzeichnet, daß diese Vorrichtung aus einer geringen Anzahl von Arbeitsformen (A) zum Ein-oder Überformen, einem Verbindungsstück (B) zwischen Arbeitsform und dem Vakuumsystem in der Formgebungsmaschine sowie einer Übergabestation (C) zur Aufnahme der Arbeitsform nach dem Formgebungsvorgang und zum Entleeren dieser besteht.

2. Vorrichtung nach Anspruch 1, dadurch gekennzeichnet, daß die Arbeitsform (A) aus Gips, Kunststoff oder ähnlichem mit eingegossenen Kanälen(4), welche sich knapp unter dem Formbereich befinden, für Vakuum und Druckluft versehen ist und um die Festigkeit der Arbeitsform (A) dennoch zu gewährleisten ist unter dem Formbereich der Arbeitsform bei den Kanälen ein stabiles Metallgitter (2)eingegossen.

3. Vorrichtung zur Durchführung dieses Verfahrens nach Anspruch 1 und 2, dadurch gekennzeichnet, daß der zentrale, in der Symmetrieachse der Arbeitsform befindliche Anschluß (3)für das Einlassen von Druckluft oder Vakuum in die Kanäle (4)der Arbeitsform (A) und auch gleichzeitig als Befestigungselement der Arbeitsform (A) in der Übergabestation (C) dient.

4. Vorrichtung nach Anspruch 3, dadurch gekennzeichnet, daß das Verbindungsstück (B), welches sich aus dem Dichtelement(9),der Ausstoßkappe(7) und dem Zwischenstück (8)zusammensetzt, zur Verbindung zwischen dem Anschluß(3) der Arbeitsform (A) und dem Vakuumsystem der Formgebungsmaschine oder einem anderen Vakuumsystem vorgesehen ist.

5. Vorrichtung nach einem der Ansprüche 1 bis 4, dadurch gekennzeichnet, daß die Übergabestation (C) die Arbeitsformen (A) mit den ausgeformten Artikel (5bzw. 6) aufnimmt, durch eine Schwenkbewegung umdreht, und die Kanäle - (4)der Arbeitsform (A) mit Druck, nachdem automatisch eine Verbindung der Druckleitung (20)-über den Anschluß (3) in die Kanäle (4)der Arbeitsform (A) hergestellt wurde, beaufschlagt und dadurch die Artikel (5 bzw. 6) schonend und präzise absetzt.

6. Vorrichtung nach einem der Ansprüche 1 bis 5, dadurch gekennzeichnet, daß eine Einrichtung vorgesehen ist, mittels der die Artikel vor dem Entleeren aus der Arbeitsform (A) Mikrowellen ausgesetzt werden.

7. Rollermaschine für die Herstellung von keramischen Gegenständen, dadurch gekennzeichnet, daß die Arbeitsform nach den Merkmalen eines der vorhergehenden Ansprüchen ausgebildet ist, daß ein Verbindungsstück (B) die Vakuumeinleitung in die Arbeitsform ermöglicht und daß in Verbindung mit einer Übergabestation (C) das Ausformen der Artikel sofort nach dem Rollvorgang möglich ist.

Figur 1

Figur 2

Figur 3

Figur 4